# EUROPÄISCHE PATENTSCHRIFT

(11) **EP 0 468 168 B1**
(45) Veröffentlichungstag und Bekanntmachung des Hinweises auf die Patenterteilung: **24.08.1994**
(21) Anmeldenummer: 91109026.4
(22) Anmeldetag: 03.06.1991
(51) Int. Cl.: B66B 11/04, H02K 17/10

(54) **Getriebelose Antriebsmaschine für Aufzüge**
Gearless driving motor for an elevator
Moteur d'entraînement sans engrenage pour un ascenseur

(30) Priorität: 26.07.1990 CH 2466/90
(43) Veröffentlichungstag der Anmeldung: 29.01.1992
(73) Patentinhaber: INVENTIO AG, CH-6052 Hergiswil NW (CH)
(72) Erfinder: Vertesy, Josef, CH-6006 Luzern (CH); Cholinski, Andrzej, CH-6030 Ebikon (CH)

(56) Entgegenhaltungen:
- EP-A- 0 079 420
- DE-A- 3 536 464
- FR-A- 2 500 688
- US-A- 4 679 661
- PATENT ABSTRACTS OF JAPAN vol. 10, no. 5 (E-372)(2062)
- 10. Januar 1986 & JP-A-60 167 645 ( SONY K.K ) 31. August 1985

## Beschreibung

Die Erfindung betrifft eine getriebelose Antriebsmaschine für Aufzüge mit einem Maschinenrahmen, mit einem eine Hauptwelle antreibenden Hubmotor, bestehend aus einem Stator und einem Rotor, sowie mit einer an der Abtriebsseite der Hauptwelle angeordneten Treibscheibe, in deren Seilrillen die die Kabine mit dem Gegengewicht verbindenden Tragseile geführt werden.

Aus der Patentschrift US-A-4 679 661 ist eine Antriebsmaschine in Modulbauweise mit einem von einem Ständer getragenen Lagerschild bekannt, der einerseits zylinderförmig und andererseits kegelstumpfförmig endet. Im zylinderförmigen Abschnitt des Lagerschildes wird eine beidseitig aus dem Lagerschild herausragende Welle mittels einem Doppelrollenlager gelagert. Am aus dem zylinderförmigen Abschnitt des Lagerschildes herausragenden konusförmigen Endabschnitt der Welle ist eine Treibscheibe angeordnet. Das aus dem kegelstumpfförmigen Abschnitt des Lagerschildes herausragende Ende der Welle trägt einen zu einem Elektromotor gehörenden Rotor, der von einem nicht dargestellten in einem zylindrischen Gehäuse angeordneten Stator umfasst wird. Das zylindrische Gehäuse wird einenends von einem deckelförmigen Lagerschild abgeschlossen, an dem ein drittes für die Lagerung der Welle vorgesehenes Lager angeordnet ist. Anderenends weist das zylindrische Gehäuse einen Flansch auf, der mit dem kegelstumpfförmigen Abschnitt des das Doppelrollenlager tragenden Lagerschildes verbunden ist.

Ein Nachteil der bekannten Einrichtung liegt darin, dass durch den mechanischen Aufbau bedingte hohe Biegemomente entstehen, die bei der Auslegung des Maschinenrahmens berücksichtigt werden müssen. Ein weiterer Nachteil besteht darin, dass durch die dreifache Lagerung der Welle und durch die doppellageraussenseitige Anordnung der Treibscheibe Lager und Welle einer übermässig hohen mechanischen Beanspruchung ausgesetzt werden. Neben den mechanischen Unzulänglichkeiten liegt ein weiterer Nachteil darin, dass wegen dem komplexen mechanischen Aufbau ein Vorortzusammenbau der Antriebsmaschine nicht möglich ist.

Hier will die Erfindung Abhilfe schaffen. Die Erfindung, wie sie in den Ansprüchen gekennzeichnet ist, löst die Aufgabe, die Nachteile der bekannten Einrichtung zu vermeiden und eine getriebelose Antriebsmaschine für Aufzüge so auszugestalten, dass mit üblichem Handwerkszeug ein bausatzartiger Zusammenbau der einzelnen Maschinenteile möglich ist.

Die durch die Erfindung erreichten Vorteile sind im wesentlichen darin zu sehen, dass mit Frequenzumrichtern gespeiste getriebelose Antriebsmaschinen für den mittleren und oberen Leistungsbereich in kompakter Modulbauweise realisierbar sind, welche grosse Radiallasten an der Treibscheibe, welche verschiedene Motorengrössen, welche einfache Motorenmontage und welche Links- und Rechtsausladung der Gegenrolle bei gleichbleibender Maschinenrahmenkonstruktion zulassen.

Im folgenden wird die Erfindung anhand von lediglich einen Ausführungsweg darstellenden Zeichnungen näher erläutert. Es zeigen:
- Fig. 1: Eine erfindungsgemässe Antriebsmaschine mit Maschinenrahmen, Lagerbock, Treibscheibe und Hubmotor in schematischer Darstellung,
- Fig. 2: Einzelheiten der Antriebsmaschine gemäss Fig. 1,
- Fig. 3: einen Längsschnitt durch einen auf einen Schildbock aufgesetzten wechselspannungsgespeisten Hubmotor mit Stator und Rotor,
- Fig. 4: Einzelheiten des geblechten Rotors mit auf die Hauptwelle aufschiebbarer Rotornabe und
- Fig. 5: einen Ausschnitt in Seitenansicht des Rotors gemäss Fig. 4 mit an einem Kurzschlussring angeordneten Balancierblechen.

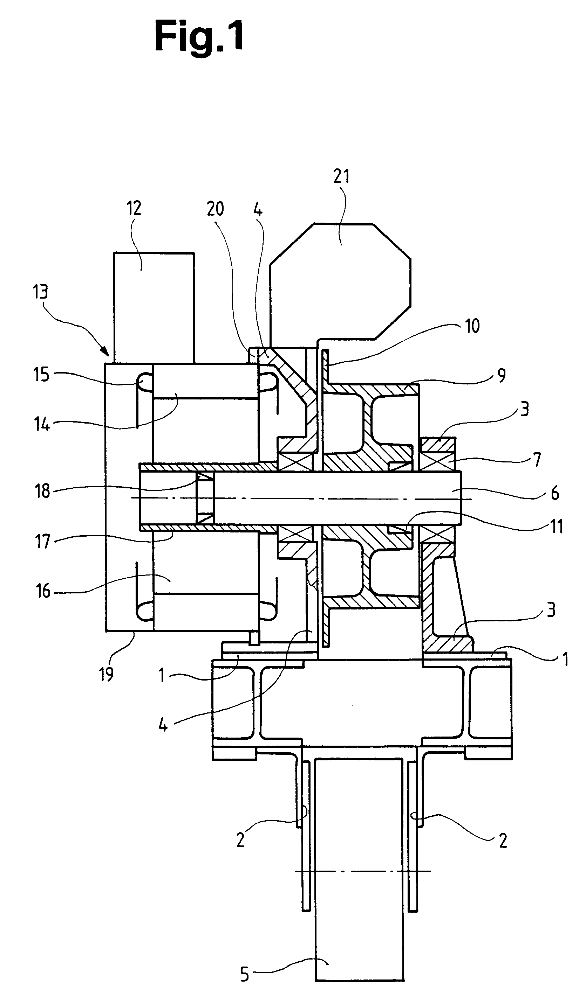

In den Fig. 1 bis 5 ist mit 1 ein Maschinenrahmen mit daran befestigten Gegenrollenträgern 2 bezeichnet, der einen Lagerbock 3 und einen Schildbock 4 trägt. Mittels dem Maschinenrahmen 1 und einer am Gegenrollenträger 2 angeordneten Gegenrolle 5 ist ein verstellbarer Seilstrangabstand machbar, wobei mit demselben Maschinenrahmenaufbau eine Links- und eine Rechtsausladung der Gegenrolle 5 möglich ist. Eine Hauptwelle 6 ist mittels einem am Lagerbock 3 angeordneten Loslager 7 und mittels einem am Schildbock 4 angeordneten Festlager 8 abtriebsseitig an zwei Stellen gelagert. Zwischen den Lagerstellen ist eine Treibscheibe 9 mit Bremsscheibe 10 vorgesehen, an der eine nicht dargestellte Scheibenbremse angreift, die zur kompakten Bauweise der Antriebsmaschine beiträgt. Die Treibscheibe 9 steht mittels einem ersten lösbaren Spannsatz 11 in fester Verbindung mit der Hauptwelle 6. Das Festlager 8 im Schildbock 4 und das Loslager 7 im Lagerbock 3 gewährleisten eine einfache Demontage des Lagerbocks 3 und somit auch ein einfacher Austausch der Treibscheibe 9. Die beidseitige Lagerung der Treibscheibe 9 erlaubt bei kleinen Deformationen der Hauptwelle 6 grosse Radiallasten. Ausserdem sind bei gleichbleibendem Aufbau des mechanischen Teils antriebsseitig verschiedene Motorengrössen anbaubar.

Ein über einen an Klemmenkasten 12 mit Wechselspannung gespeister Hubmotor 13 besteht im wesentlichen aus einem Stator 14 mit Wicklungen 15 und aus einem fliegenden Rotor 16 mit einer auf die Hauptwelle 6 aufschiebbaren Rotornabe 17. Am antriebsseitigen Ende der Hauptwelle 6 schafft ein zweiter lösbarer Spannsatz 18 eine feste Verbindung zwischen der Hauptwelle 6 und der Rotornabe 17. Eine den Klemmenkasten 12 tragende Verschalung 19 ummantelt den Stator 14, der mittels einem vorderen Flansch 20 fliegend am Schildbock 4 befestigt ist. Zur Kühlung des Hubmotors 13 und des Festlagers 8 ist ein Ventilator 21 vorgesehen, der wie auch der Klemmenkasten 12 innerhalb der Maschinenbreite angeordnet ist, was wiederum zu einem kompakten Maschinenaufbau beiträgt.

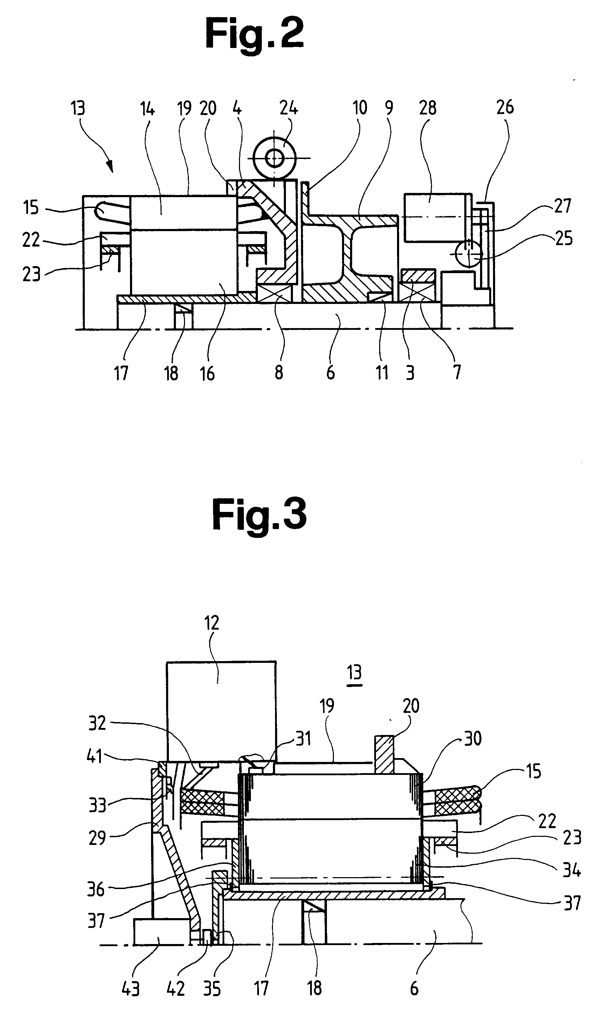

Fig. 2 zeigt Einzelheiten der Antriebsmaschine gemäss Fig. 1. Der fliegend angeordnete Rotor 16 des Hubmotors 13 weist am Umfang angeordnete Kurzschlussstäbe 22 auf, deren Enden über einen Kurzschlussring 23 verbunden sind. Voraussetzung für eine fliegende Anordnung des Rotors 16 ist ein kurzer Hubmotor 13 mit einem grossen Durchmesser. Der erfindungsgemässe Aufbau und die erfindungsgemässe Anordnung des Hubmotors 13, insbesondere des fliegenden Rotors 16 erbringt vorteilhafte Wirkungen hinsichtlich getrennter Montage von Stator und Rotor sowie einfachem Zusammenbau und guter Zugänglichkeit beim Motorenaustausch. Eine am Schildbock 4 angeordnete Aufhängeöse 24 erleichtert die einstückige Vorortmontage der Antriebsmaschine. Ein auf die Hauptwelle 6 wirkender Handantrieb 25 mit einem nicht dargestellten Schneckengetriebe ermöglicht bei Spannungsausfall ein manuelles Bewegen der Hauptwelle 6. Ein unter einer Abdeckung 26 geführter Riemen 27 überträgt die Rotationsbewegung der Hauptwelle 6 auf einen Impulsgenerator 28, der eine von der Rotationsbewegung abhängige Anzahl Impulse erzeugt, die der Steuerung als Drehzahlistwert zugeführt werden.

Im Längsschnitt gemäss Fig. 3 ist mit 29 ein Motorschild bezeichnet, der in Verbindung mit einem hinteren Flansch 41 den Motorinnenraum von hinten abschliesst. Im Motorschildzentrum ist eine Öffnung zur Befestigung eines Drehimpulsgebers 43 vorgesehen, welcher mit einem Zwischenflansch 35 mittels einer Kupplung 42 angetrieben wird. An der Oberfläche eines Blechpackets 30 über den Umfang verteilte in achsialer Richtung angeordnete nicht dargestellte U-förmige mit der U-Öffnung mit dem Blechpacket 30 verbundene Blechprofile verbinden den vorderen Flansch 20 mit dem hinteren Flansch 41. Die an den U-förmigen Blechprofilen angeordneten Verschalungen 19 schliessen die streifenförmigen Lücken zwischen den U-förmigen Blechprofilen. Die Hohlräume zwischen dem Blechpacket 30 und den U-förmigen Blechprofilen wie auch die Hohlräume zwischen dem Blechpacket 30 und den Verschalungen 19 dienen als Luftkanäle. Am vorderen Flansch 20 sind nicht dargestellte Ausschnitte vorgesehen, die den Durchgang des Ventilatorluftstromes gewährleisten.

Ein an der Blechpacketoberfläche angeordneter Temperaturwächter 31 schützt den Hubmotor 13 vor Überhitzung. Vom Klemmenkasten 12 ausgehende Anschlussleiter 32 speisen die in das Blechpacket 30 eingelegten Wicklungen 15. Ein Schutzleiter 33 führt durch Isolationsdefekte auftretende gefährliche Berührungsspannungen von den metallischen Teilen des Hubmotors 13 ab. Auf die rohrförmige Rotornabe 17 montierte Rotorbleche 34 werden mittels dem Zwischenflansch 35 und einer Pressplatte 36 zu einem Rotorblechpacket zusammengepresst und durch Sicherungsringe 37 an der Rotornabe 17 gesichert. Die am Umfang des Rotorblechpackets in nicht dargestellte Nuten eingelegten Kurzschlussstäbe 22 sind an ihren Enden mit je einem Kurzschlussring 23 verbunden. Durch die Verwendung einer rohrförmigen Rotornabe 17 ist ein von der Hauptwelle 6 unabhängiger Rotorzusammenbau möglich. Die Rotornabe 17 vereinfacht die Montage des Rotors 16 auf die Hauptwelle 6, indem lediglich die Rotornabe 17 auf die Hauptwelle 6 aufgeschoben und der zweite lösbare Spannsatz 18 festgezogen werden müssen. Sinngemässes Vorgehen gilt bei der Demontage des Rotors 16.

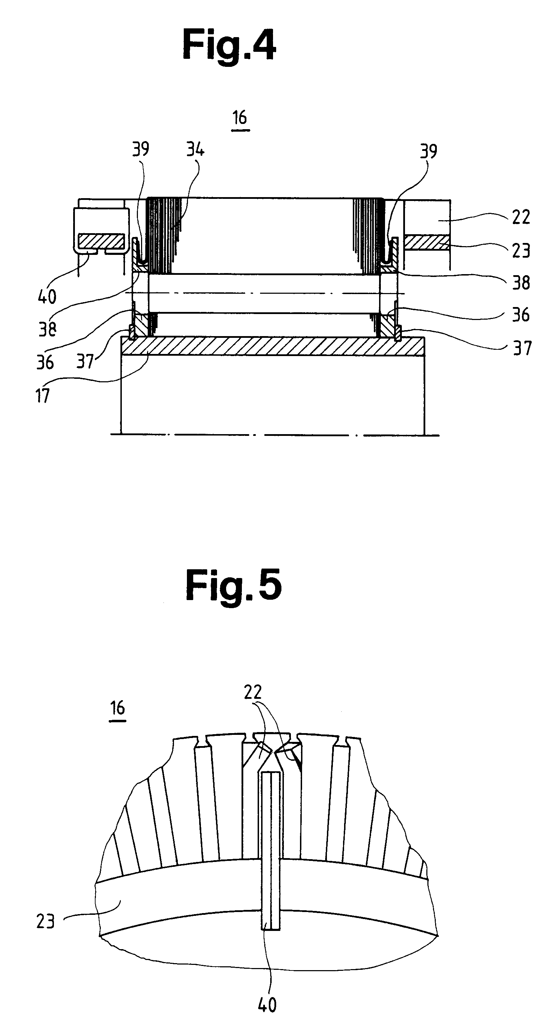

Fig. 4 zeigt Einzelheiten der Befestigung der Rotorbleche 34 und der Balancierung des Rotors 16. Je Rotorstirnfläche ist eine Pressplatte 36 vorgesehen, die am Umfang ein L-förmiges Ende aufweist, das als Federträger 38 dient. Als Alternative zu teuren Endblechen presst eine J-förmige Feder 39 mit ihrem geraden Teil gegen das äusserste Rotorblech 34. Das aufgebogene Ende der Feder 39 verrastet mit dem langen Schenkel des Federträgers 38. Die Feder 39 verhindert durch klappernde Rotorbleche 34 hervorgerufene Geräusche und Dauerbrüche an den Rotorblechen 34. Am Kurzschlussring 23 angeordnete Balancierbleche 40 kompensieren Rotorunwuchten. Rechteckförmige Balancierbleche 40 mit zwei freien Enden werden parallel zu den Enden der Kurzschlussstäbe 22 auf den Kurzschlussring 23 aufgesetzt und ihre freien Enden in achsialer Richtung um den Kurzschlussring 23 gebogen.

Fig. 5. zeigt Einzelheiten zur Montage der Balancierbleche 40. Aus dem Ausschnitt des in einer Seitenansicht gezeigten Rotors 16 sind zwei zwischen zwei Kurzschlussstabenden eingefügte Balancierbleche 40 ersichtlich, deren freien Enden über die Unterfläche des Kurzschlussringes 23 gebogen sind. Durch Zusammenbiegen der Kurzschlussstabenden werden die Balancierbleche 40 gesichert.

## Patentansprüche

1. Getriebelose Antriebsmaschine für Aufzüge mit einem Maschinenrahmen (1), mit einem eine Hauptwelle (6) antreibenden Hubmotor (13), bestehend aus einem Stator (14) und einem Rotor (16), sowie mit einer an der Abtriebsseite der Hauptwelle (6) angeordneten Treibscheibe (9), in deren Seilrillen die die Kabine mit dem Gegengewicht verbindenden Tragseile geführt werden,
dadurch gekennzeichnet,
dass zur abtriebsseitigen Lagerung der Hauptwelle (6) ein Loslager (7) und ein Festlager (8) vorgesehen sind, zwischen denen die Treibscheibe (9) angeordnet ist,
dass die Hauptwelle (6) antriebsseitig ein freies Ende aufweist und
dass der Hubmotor (13) einen fliegenden Rotor (16) aufweist, der in lösbarer Verbindung mit dem freien Ende der Hauptwelle (6) steht.

2. Getriebelose Antriebsmaschine nach Anspruch 1,
dadurch gekennzeichnet,
dass das Loslager (7) an einem abnehmbaren Lagerbock (3) und das Festlager (8) an einem Schildbock (4) angeordnet sind.

3. Getriebelose Antriebsmaschine nach Anspruch 1,
dadurch gekennzeichnet,
dass die Treibscheibe (9) lagerbockseitig auf die Hauptwelle (6) aufschiebbar und mit der Hauptwelle (6) mittels einem ersten lösbaren Spannsatz (11) fest verbindbar ist.

4. Getriebelose Antriebsmaschine nach Anspruch 1,
dadurch gekennzeichnet,
dass die Treibscheibe (9) eine Bremsscheibe (10) aufweist, an der eine zum Halten der Kabine vorgesehene Scheibenbremse angreift.

5. Getriebelose Antriebsmaschine nach Anspruch 1,
dadurch gekennzeichnet,
dass der Stator (14) des Hubmotors (13) mittels einem vorderen Flansch (20) fliegend am Schildbock (4) angeordnet ist.

6. Getriebelose Antriebsmaschine nach Anspruch 1,
dadurch gekennzeichnet,
dass der fliegende Rotor (16) des Hubmotors (13) eine auf das freie Ende der Hauptwelle (6) aufschiebbare Rotornabe (17) aufweist, die mittels einem zweiten lösbaren Spannsatz (18) in fester Verbindung mit dem freien Ende steht.

7. Getriebelose Antriebsmaschine nach Anspruch 1,
dadurch gekennzeichnet,
dass am fliegenden Rotor (16) des Hubmotors (13) je Stirnfläche eine Pressplatte (36) mit einem Federträger (38) vorgesehen ist.

8. Getriebelose Antriebsmaschine nach Anspruch 5,
dadurch gekennzeichnet,
dass an einem Blechpacket (30) des Stators (14) angeordnete U-förmige Blechprofile zur Verbindung des vorderen Flansch (20) mit einem hinteren Flansch (41) vorgesehen sind.

9. Getriebelose Antriebsmaschine nach Anspruch 5,
dadurch gekennzeichnet,
dass am vorderen Flansch (20) Ausschnitte zur Durchleitung des Ventilatorluftstromes in als Luftkanäle dienende durch Blechpacket (30), U-förmige Blechprofile und Verschalungen (19) gebildete Hohlräume vorgesehen sind.

10. Getriebelose Antriebsmaschine nach Anspruch 7,
dadurch gekennzeichnet,
dass zur Halterung der äussersten Rotorbleche (34) J-förmige Federn (39) vorgesehen sind, die am aufgebogenen Ende mit dem L-förmigen Ende des Federträgers (38) verrasten.

11. Getriebelose Antriebsmaschine nach Anspruch 7,
dadurch gekennzeichnet,
dass auf Kurzschlussringe (23) aufgesetzte Balancierbleche (40) mit freien um die Kurzschlussringe (23) gebogenen Enden vorgesehen sind, wobei die Balancierbleche (40) zur Sicherung von zusammengebogenen Enden der Kurzschlussstäbe (22) gehalten werden.

12. Getriebelose Antriebsmaschine nach Anspruch 8,
dadurch gekennzeichnet,
dass ein mit dem hinteren Flansch (41) in Verbindung stehender den Motorinnenraum von hinten abschliessender Motorschild (29) vorgesehen ist, in dessen Zentrum ein mittels einer Kupplung (42) mit einem Zwischenflansch (35) verbundener Drehimpulsgeber (43) angeordnet ist.

## Claims

1. Gearless drive machine for lifts, with a machine frame (1), with a hoist motor (13), which drives a main shaft (6) and consists of a stator (14) and a rotor (16), as well as with a drive pulley (9), which is arranged at the output side of the main shaft (6) and in the cable grooves of which are guided the carrying cables connecting the cage with the counterweight, characterised thereby, that a loose bearing (7) and a fixed bearing (8), between which the drive pulley (9) is arranged, are provided for the output end bearing of the main shaft (6), that the main shaft (6) has a free driven end and that the hoist motor (13) has an overhung rotor (16), which stands in detachable connection with the free end of the main shaft (6).

2. Gearless drive machine according to claim 1, characterised thereby, that the loose bearing (7) is arranged at a removable bearing block (3) and the fixed bearing (8) is arranged at an end plate block (4).

3. Gearless drive machine according to claim 1, characterised thereby, that the drive pulley (9) is pushable at its bearing block end onto the main shaft (6) and firmly connectable with the main shaft (6) by means of a first detachable tightening set (11).

4. Gearless drive machine according to claim 1, characterised thereby, that the drive pulley (9) has a brake disc (10), at which engages a disc brake provided for the stopping of the cage.

5. Gearless drive machine according to claim 1, characterised thereby, that the stator (14) of the hoist motor (13) is arranged to be overhung at the end plate block (4) by means of a forward flange (20).

6. Gearless drive machine according to claim 1, characterised thereby, that the overhung rotor (16) of the hoist motor (13) displays a rotor hub (17), which is pushable onto the free end of the main shaft (6) and stands in firm connection with the free end by means of a second detachable tightening set (18).

7. Gearless drive machine according to claim 1, characterised thereby, that a pressure plate (36) with a spline carrier (38) is provided for each end face at the overhung rotor (16) of the hoist motor (13).

8. Gearless drive machine according to claim 5, characterised thereby, that U-shaped sheet metal profiles, which are arranged at a lamination packet (30) of the stator (14), are provided for the connection of the forward flange (20) with a rearward flange (41).

9. Gearless drive machine according to claim 5, characterised thereby, that cut-outs are provided at the forward flange (20) for the passage of the fan air current in hollow spaces serving as air channels and formed by the lamination packet (30), U-shaped sheet metal profiles and cowlings (19).

10. Gearless drive machine according to claim 7, characterised thereby, that J-shaped keys (39), which at the bent-open end detent with the L-shaped end of the spline carrier (38), are provided for the retention of the outermost rotor laminations (34).

11. Gearless drive machine according to claim 7, characterised thereby, that metal balancing plates (40) placed onto short-circuit rings (23) are provided with free ends bent around the short-circuit rings (23), wherein the metal balancing plates (40) are retained for the securing of bent-together ends of the short-circuit rods (22).

12. Gearless drive machine according to claim 8, characterised thereby, that a motor end plate (29) is provided, which terminates the interior motor space from the rear and stands in connection with the rearward flange (41) and in the centre of which is arranged a rotary pulse transmitter (43) connected with an intermediate flange (35) by means of a clutch (42).

## Revendications

1. Moteur d'entraînement sans engrenage pour ascenseurs, comprenant un bâti de moteur (1), un moteur de levage (13) entraînant un arbre principal (6) et formé d'un stator (14) et d'un rotor (16), et une poulie motrice (9) qui est disposée du côté de la sortie de l'arbre principal (6) et dans les gorges de laquelle sont guidés les câbles porteurs reliant la cabine au contre-poids, caractérisé en ce qu'il est prévu, pour l'appui de l'arbre principal (6), côté sortie, un palier libre (7) et un palier fixe (8) entre lesquels est disposée la poulie motrice (9), en ce que l'arbre principal (6) présente une extrémité libre, côté entraînement, et en ce que le moteur de levage (13) comporte un rotor flottant (16) qui est relié de façon détachable à l'extrémité libre de l'arbre principal (6).

2. Moteur d'entraînement sans engrenage selon la revendication 1, caractérisé en ce que le palier libre (7) est disposé au niveau d'un support de palier amovible (3) tandis que le palier fixe (8) est disposé au niveau d'un support formant flasque (4).

3. Moteur d'entraînement sans engrenage selon la revendication 1, caractérisé en ce que la poulie motrice (9) est apte à être enfilée sur l'arbre principal (6), côté support de palier, et à être reliée de façon fixe à l'arbre principal (6) l'aide d'un premier jeu de serrage détachable (11).

4. Moteur d'entraînement sans engrenage selon la revendication 1, caractérisé en ce que la poulie motrice (9) comporte une poulie-frein (10) sur laquelle agit un frein à disque prévu pour retenir la cabine.

5. Moteur d'entraînement sans engrenage selon la revendication 1, caractérisé en ce que le stator (14) du moteur de levage (13) est disposé de façon flottante au niveau du support formant flasque (4) à l'aide d'une bride avant (20).

6. Moteur d'entraînement sans engrenage selon la revendication 1, caractérisé en ce que le rotor flottant (16) du moteur de levage (13) comporte un moyeu de rotor (17) qui est apte à être enfilé sur l'extrémité libre de l'arbre principal (6) et qui est relié de façon fixe à ladite extrémité libre à l'aide d'un second jeu de serrage détachable (18).

7. Moteur d'entraînement sans engrenage selon la revendication 1, caractérisé en ce qu'il est prévu, sur chaque surface frontale du rotor flottant (16) du moteur de levage (13), une plaque de compression (36) pourvue d'un support de ressort (38).

8. Moteur d'entraînement sans engrenage selon la revendication 5, caractérisé en ce qu'il est prévu des profilés en tôle en U, disposés au niveau d'un empilage de tôles (30) du stator (14), pour relier la bride avant (20) à une bride arrière (41).

9. Moteur d'entraînement sans engrenage selon la revendication 5, caractérisé en ce qu'il est prévu, au niveau de la bride avant (20), des découpes destinées au passage du courant d'air du ventilateur dans des vides servant de canaux d'air et définis par l'empilage de tôles (30), les profilés en tôle en U et des enveloppes (19).

10. Moteur d'entraînement sans engrenage selon la revendication 7, caractérisé en ce qu'il est prévu, pour la fixation des tôles de rotor (34) extérieures, des ressorts en forme de J (39) qui s'enclenchent, avec leur extrémité repliée, avec l'extrémité en forme de L du support de ressort (38).

11. Moteur d'entraînement sans engrenage selon la revendication 7, caractérisé en ce qu'il est prévu, posées sur des bagues court-circuitées (23), des tôles d'équilibrage (40) dont les extrémités libres sont repliées sur lesdites bagues court-circuitées (23), les tôles d'équilibrage (40) étant maintenues en vue d'assujettir les extrémités pliées ensemble des barres court-circuitées (22).

12. Moteur d'entraînement sans engrenage selon la revendication 8, caractérisé en ce qu'il est prévu un flasque de moteur (29) qui est relié à la bride arrière (41) et ferme par derrière l'intérieur du moteur, et dans le centre de laquelle est disposé un distributeur d'impulsions de rotation (43) relié à une bride intermédiaire (35) à l'aide d'un accouplement (42).
